Europäisches Patentamt

European Patent Office

Office européen des brevets

(11) Publication number: **0 335 983**
**A1**

## (12) EUROPEAN PATENT APPLICATION
## published in accordance with Art. 158(3) EPC

(21) Application number: 88908750.8

(51) Int. Cl.⁴: **G05B 19/405**

(22) Date of filing: 07.10.88

(86) International application number:
PCT/JP88/01024

(87) International publication number:
WO 89/03552 (20.04.89 89/09)

(30) Priority: 09.10.87 JP 255200/87

(43) Date of publication of application:
11.10.89 Bulletin 89/41

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: MIYATA, Mitsuto
2-2-4, Nanyoudai
Hachioji-shi Tokyo 192-03(JP)
Inventor: NAGAOKA, Yukihito
Gurinhiru-Terada 219-4 432, Terada-cho
Hachioji-shi Tokyo 193(JP)
Inventor: MORIYAMA, Tomotaka
377-11, Hino Hino-shi
Tokyo 191(JP)

(74) Representative: Billington, Lawrence Emlyn et
al
HASELTINE LAKE & CO Hazlitt House 28
Southampton Buildings Chancery Lane
London WC2A 1AT(GB)

(54) METHOD OF DISPLAYING CHECK IMAGE.

(57) While a check image (CKIM) is displayed on a
display screen (13) to check a machining program in
the automatic programming unit (11) and if a request
occurs for another image to be displayed, then the
requested image is produced and displayed on the
display screen (13), and simultaneously the process-
ing for the display of the check image is internally
continued. When the check image is requested
again for display, the internally processed image is
displayed on the display screen (13) and the internal
processing is further continued.

FIG. I

## CHECK DRAWING METHOD

Technical Field

This invention relates to a check drawing method and, more particularly, to a drawing method for checking a machining program in an automatic programming apparatus which automatically creates the machining program.

Background Art

An automatic programming system is available in which conversational screens conforming to a plurality of data input steps are displayed on a display unit, and an NC program (machining program) is created automatically using data entered by way of the conversational screens.

Examples of conversational screens in such an automatic programming system include an initial screen, a program editing screen, a process editing screen and a check drawing screen. With the program editing screen, data specifying the shape of a blank (i.e., data such as outer diameter, length, material), cutting conditions (rotational speed, feed rate, etc.) and cutting path data for every machining process are successively entered (this is program editing). With the process editing screen, the sequence of machining processes is specified (this is process editing). With the check drawing screen, the path of movement of a tool is displayed based on data entered under program editing and process editing, and the manner in which a blank is cut away in accordance with tool movement is displayed, thus enabling the created machining program to be checked.

In such an automatic programming system, there are occasions when it is desired to display another related image on the display screen while the image checked is being displayed thereon following selection of the check drawing screen. In a case such as this, the conventional check drawing method is such that when the screen is changed over from the image checked to the other image, check image processing is terminated. Then, when the screen is returned to the check drawing screen, check drawing processing is started over again from the beginning. As a consequence, the conventional check drawing operation in automatic programming is a troublesome one and check drawing processing requires time.

Accordingly, an object of the invention is to provide a check drawing method in which the time required for check drawing can be shortened and the operability of automatic programming improved.

Another object of the invention is to provide a check drawing method in which, when separate processing is requested during check drawing processing, the check drawing processing is subsequently executed internally in parallel with this separate processing.

A further object of the invention is to provide a check drawing method in which, when a check drawing is requested again, the check drawing provided internally is immediately displayed on the display unit.

Disclosure of the Invention

The foregoing objects are attained by a step of displaying a check image for checking a machining program on a display screen, a step of generating another requested image, and displaying the image on the display screen, when display of this image is requested during display of the check image, a step of continuing check drawing processing internally in parallel with display of the other image on the display screen, and a step of displaying the check image obtained by check image processing on the display screen, and continuing check drawing processing, when display of the check image is requested again.

Brief Description of the Drawings

Fig. 1 is a block diagram of a conversational-type numerical control apparatus to which the method of the present invention is applied;

Fig. 2 is a block diagram of a graphic display unit;

Fig. 3 is a flowchart of processing according to the method of the invention;

Figs. 4 through 8 are examples of conversational screens in an embodiment of the present invention, in which:

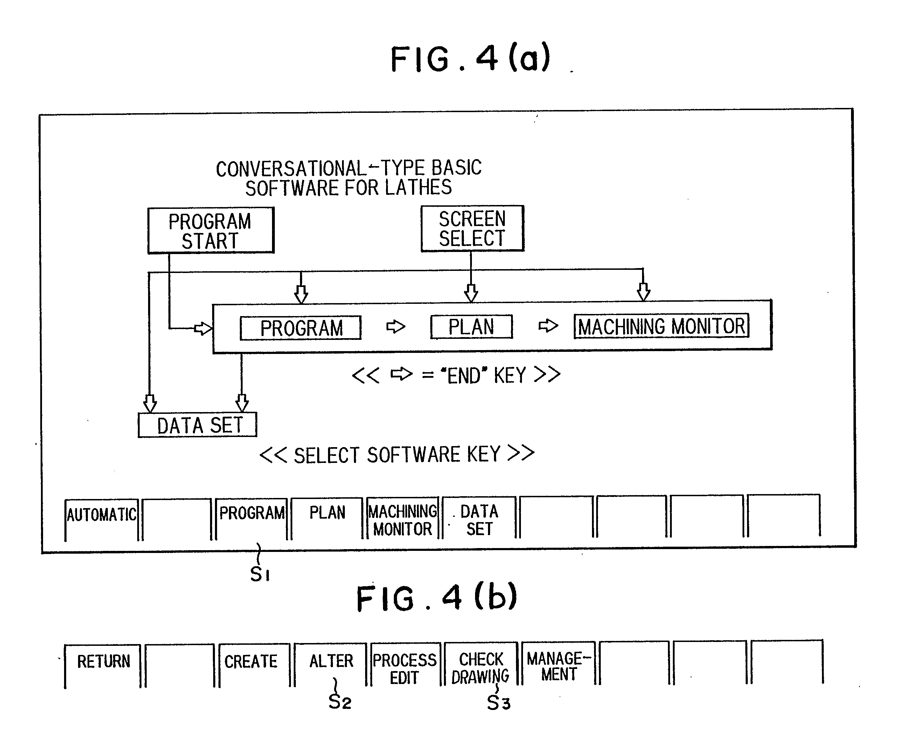

Fig. 4 is an example of an initial screen;

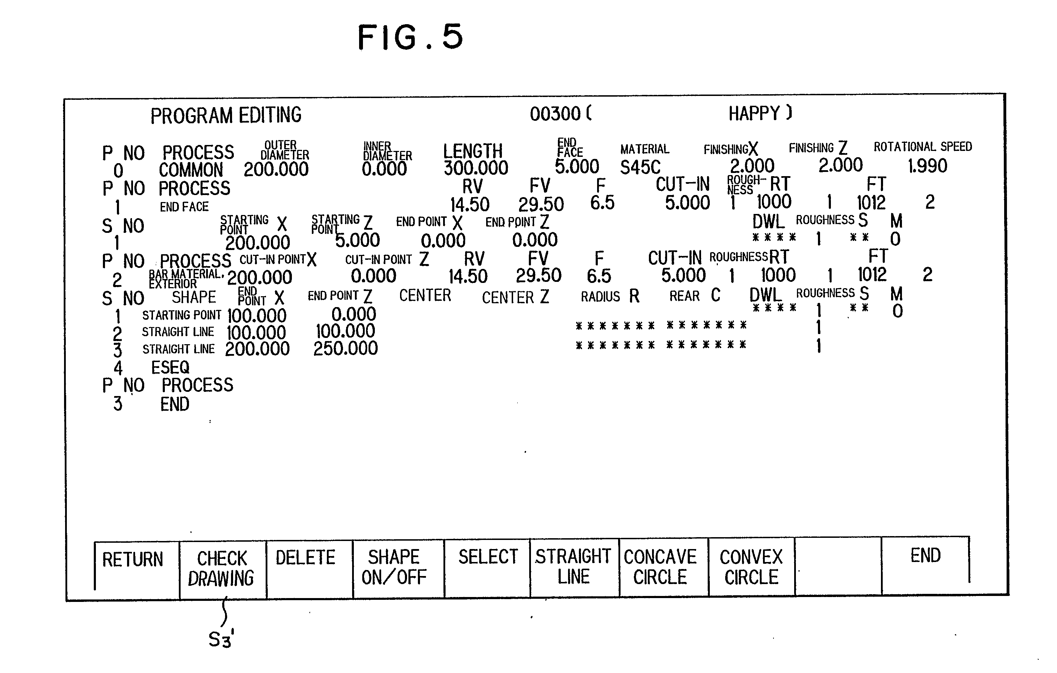

Fig. 5 is an example of a program editing screen;

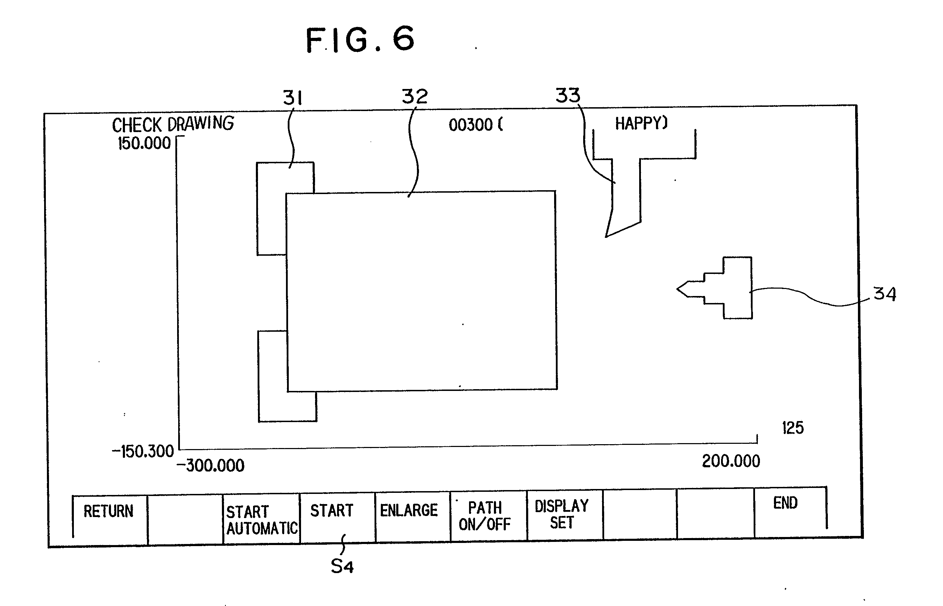

Fig. 6 is an example of a check image immediately after check drawing processing is requested:

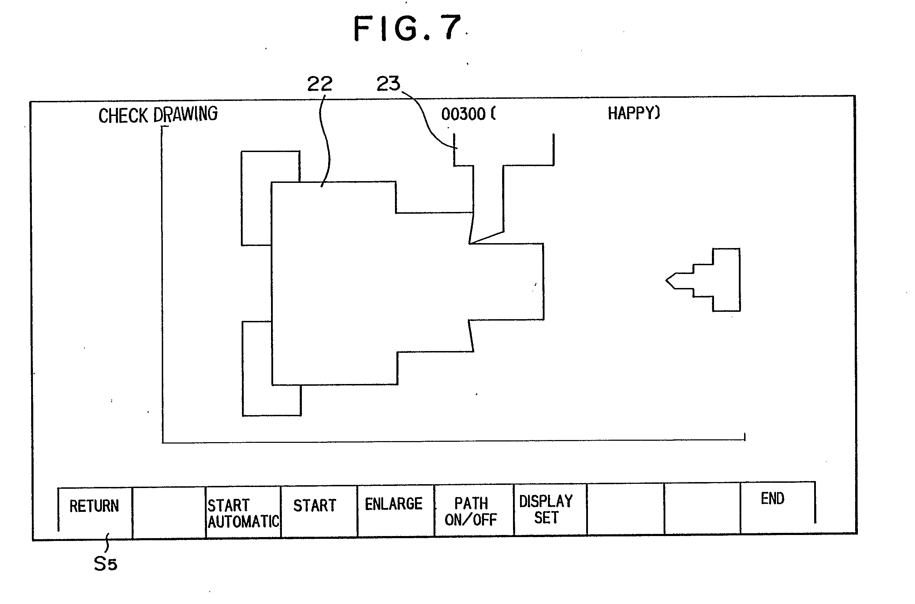

Fig. 7 is an example of a check image at a time when another image display is requested; and

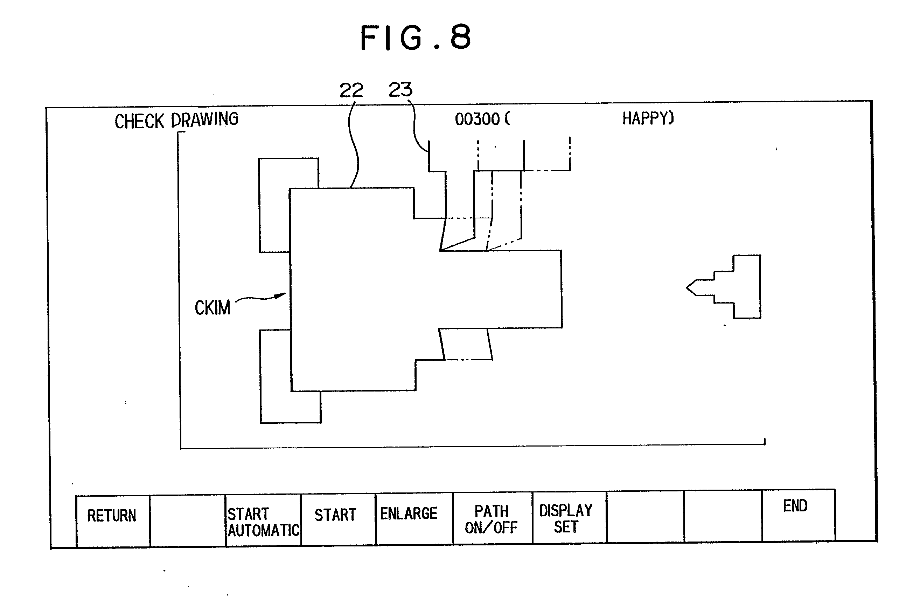

Fig. 8 is an example of a check image at a time when check image processing is requested again.

Best Mode for Carrying Out the Invention

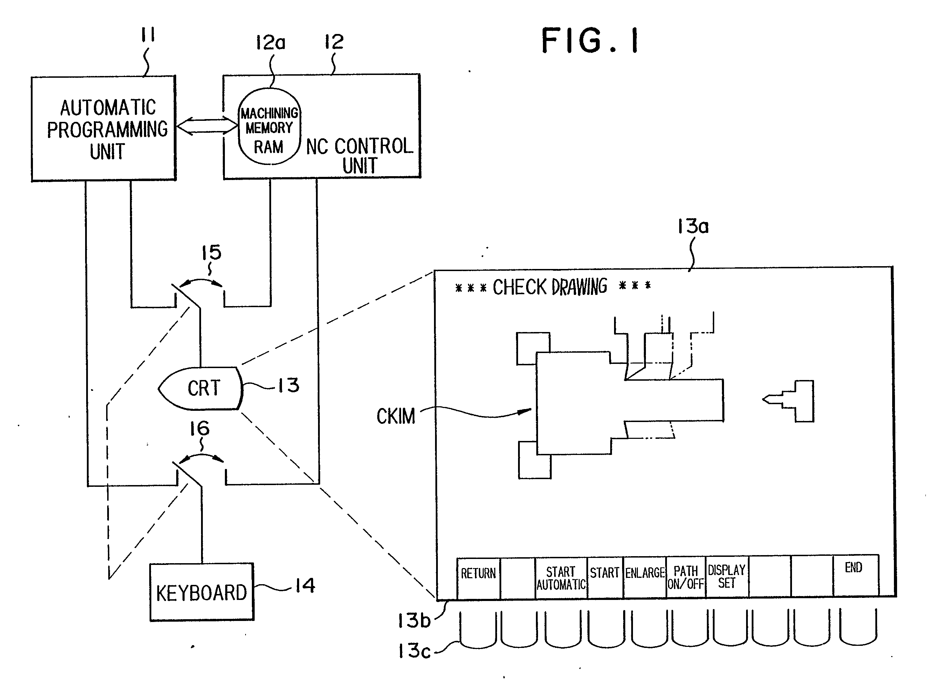

Fig. 1 is a block diagram of a conversational-type numerical control apparatus to which the method of the present invention is applied.

Numeral 11 denotes an automatic programming unit, 12 an NC control unit, 13 a graphic display unit (CRT), 14 a keyboard, and 15, 16 changeover units. Though the changeover units 15, 16 are illustrated as being switches for the sake of description, the arrangement is such that changeover is actually performed by software processing.

The automatic programming unit 11 and NC control unit 12 are constituted by a microcomputer and incorporate a processor, a control program memory (ROM) and a RAM.

The display unit 13 is divided into a conversational display area 13a and software key areas 13b. Keys 13c are provided for corresponding ones of the soft key areas. Pressing one of these keys makes it possible to enter the function displayed in the corresponding software key area. For example, if a key corresponding to "RETURN" on the check display screen is pressed, the display returns to the initial screen. By selecting a software key menu on the initial screen, another conversational screen can be displayed on the conversational screen display area 13a.

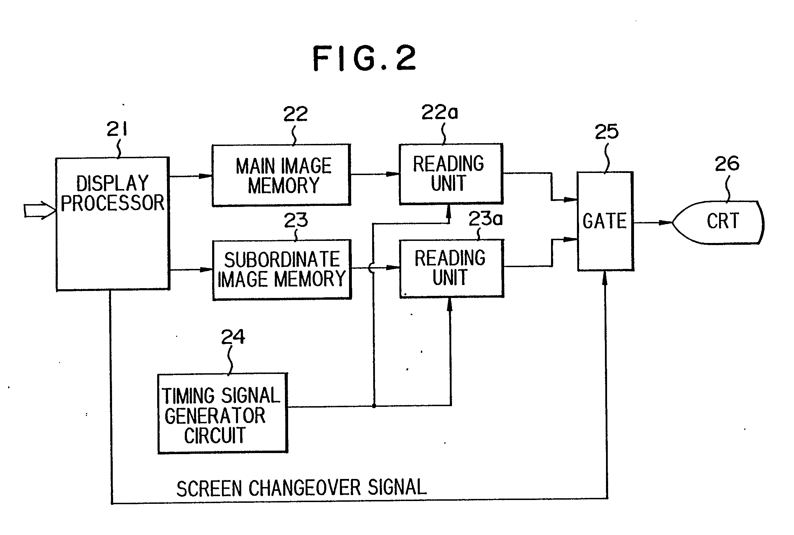

Fig. 2 is a block diagram of the graphic display unit.

Numeral 21 denotes a display processor which, based on display data, generates a predetermined conversational image and stores it in a predetermined frame memory. Numeral 22 denotes a main image memory which stores a conversational image (main image), such as the check image. Numeral 22a designates a reading unit for reading the main image out of the main image memory 22 in synchronization with raster scanning of a CRT 26. Numeral 23 denotes a subordinate image memory which, when display of an image different from a check image CKIM is requested during check drawing processing, stores the different image. Numeral 23a represents a reading unit for reading the subordinate image out of the subordinate image memory 23 in synchronization with raster scanning of the CRT 26. Numeral 24 designates a timing signal generator for generating a bit clock of a frequency conforming to the raster scanning speed of the beam of CRT 26, as well as a vertical synchronizing signal and a horizontal synchronizing signal. Numeral 25 denotes a gate circuit for providing the CRT 26 with the main image, which is read out of the main image memory 22, when a screen changeover signal GOT outputted by the display processor 21 is at a high level, and with the subordinate image, which is read out of the subordinate image memory 23, when the screen changeover signal GOT is at a low level.

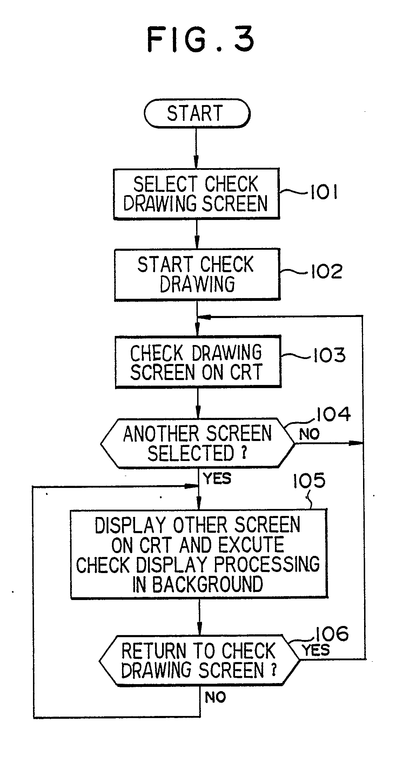

Fig. 3 is a flowchart of processing according to the method of the invention, and Figs. 4 through 8 are examples of conversational screens. Check drawing processing in the method of the present invention will now be described in accordance with Figs. 1 through 8. It will be assumed that entry of data specifying the shape of a blank (data such as outer diameter, length, material), cutting conditions (rotational speed, feed rate, etc.) and cutting path data for every machining process using conversational-type software for a lathe in the automatic programming unit 11 has been completed by way of the program editing screen (see Fig. 5), that entry of a machining process sequence has been completed by way of the process editing screen (not shown), and that all data necessary for machining program creation have been entered.

With the initial screen, e.g., the initial screen of conversational-type software for lathes illustrated in Fig. 4(a), displayed on the CRT 26 and stored in the main image memory 22 (see Fig. 2) (ordinarily, the screen changeover signal GOT is at the high level, so that the gate circuit 25 is outputting the main image to the CRT 26), a software key "PROGRAM' $S_1$ is selected to display the software key menu shown in Fig. 4(b). Then, when "CHECK DRAWING" $S_3$ is selected from the software key menu, the display processor 21 generates the check drawing image shown in Fig. 6 and stores this image in the main image memory 22. As a result, the check drawing image is subsequently read out by the reading unit 22a and fed into the CRT 26 via the gate circuit 25 to be displayed. In Fig. 6, numeral 31 denotes a chuck, 32 a blank, 33 a cutter (tool) and 34 a head stock (step 101).

Next, when "START" $S_4$ is selected from the software key menu of the check drawing screen, the display processor 21 starts check drawing processing to display a path of tool movement based on data entered from the automatic programming unit 11, as well as the manner in which the blank is cut away in accordance with the movement of the tool (step 102). The manner in which the workpiece is cut away is displayed on the CRT 26 as shown in Fig. 7, by way of example (step 103).

There are occasions where the operator wishes to display an image (e.g., the program editing image shown in Fig. 5) other than the check drawing image on the CRT 26 while the CRT is displaying the check drawing image of Fig. 7. In such case, "RETURN" $S_5$ is selected from the software key menu at the bottom of Fig. 7 (step 104).

When "RETURN" $S_5$ is selected, the display processor 21 generates the initial screen shown in Fig. 4, stores this screen in the subordinate image memory 23 and outputs the low-level image changeover signal GOT to the gate circuit 25. As a result, the subordinate image (initial screen) subsequently read out of the image memory 23 by the reading unit 23a is fed into the CRT 26 via the gate circuit 25 to be displayed. Next, when a menu "ALTER" $S_2$ for calling the program editing screen is selected from among the software menu keys, the display processor 21 generates the program editing image shown in Fig. 5, stores this image in the subordinate image memory 23 and displays it on the CRT 26. It should be noted that even when there is a changeover from the check drawing image to the other image, the display processor 21 continues executing check drawing processing, generating the processed image (the check drawing image) and storing the image in the main image memory (step 105).

When it is desired to return to the check drawing image from the program editing screen in this state, a software key menu "CHECK DRAWING" $S_3'$ is selected from the software key menu at the bottom of Fig 5. In response, the display processor 21 delivers the high-level screen changeover signal GOT to the gate circuit 25, and thereafter causes the check drawing image stored in the main image memory 22 to be displayed on the CRT 26 (step 106). Fig. 8 illustrates an example of a conversational screen obtained when a return is made from the program editing screen to the check drawing screen. The broken lines indicate the state of the blank and tool at the time that display of the other image was requested at step S104. That is, Fig. 8 illustrates that check drawing processing from the broken lines to the solid lines was performed by the display processor 21 during the time that the other image was being requested on the CRT 26.

In accordance with the invention, when display of an image different from a check image, which is for checking a machining program, is requested while the check image is being displayed on a display screen, the requested different image is generated and displayed on the display screen. In concurrence with the display of the different image on the display screen, check drawing processing is continued internally. When display of the check image is requested, the check image obtained by the check drawing processing is displayed on the display screen and check image processing is continued. This makes it possible to shorten check drawing time and enhance the operability of automatic programming.

## Claims

1. A display method for checking a machining program in an automatic programming apparatus which automatically creates the machining program, characterized by comprising:

a first step of displaying a check image for checking a machining program on a display screen;

a second step of generating another image that has been requested, and displaying this image on the display screen, when display of this image is requested during display of said check image;

a third step of continuing check drawing processing in parallel with display of said other image on the display screen; and

a fourth step of displaying the check image obtained by check image processing on the display screen, and continuing check drawing processing, when display of the check image is requested.

2. A check drawing method according to claim 1, characterized by providing two memories for image storage, storing the check image generated at the first step in a first memory, storing said other image generated at the second step in a second memory, and displaying an image read out of said second memory.

3. A check drawing method according to claim 2, characterized by updating the check image stored in the first memory by the check image processing of said third step, and

displaying the check image read out of the first memory when display of the check image is requested at said fourth step.

FIG. 1

EP 0 335 983 A1

# FIG.2

EP 0 335 983 A1

# FIG. 3

```
        ( START )
            │
            ▼
┌──────────────────────┐
│  SELECT CHECK        │──── 101
│  DRAWING SCREEN      │
└──────────────────────┘
            │
            ▼
┌──────────────────────┐
│  START CHECK         │──── 102
│  DRAWING             │
└──────────────────────┘
            │
            ▼ ◄─────────────────────────┐
┌──────────────────────┐                │
│  CHECK DRAWING       │──── 103         │
│  SCREEN ON CRT       │                 │
└──────────────────────┘                 │
            │                            │
            ▼                  104        │
      ╱ ANOTHER SCREEN ╲ ── NO ──────────┤
      ╲ SELECTED ?     ╱                 │
            │                            │
           YES              105           │
            ▼ ◄──────────┐               │
┌──────────────────────┐ │               │
│  DISPLAY OTHER SCREEN │ │               │
│  ON CRT AND EXCUTE    │ │               │
│ CHECK DISPLAY PROCESSING│               │
│  IN BACKGROUND        │ │               │
└──────────────────────┘ │               │
            │            │      106        │
            ▼            │               │
      ╱ RETURN TO CHECK ╲─ YES ──────────┘
      ╲ DRAWING SCREEN ?╱
            │            │
           NO───────────┘
```

# FIG. 4(a)

CONVERSATIONAL-TYPE BASIC
SOFTWARE FOR LATHES

PROGRAM START → SCREEN SELECT

PROGRAM ⇧ PLAN ⇧ MACHINING MONITOR

→ DATA SET

<< ⇧ = "END" KEY >>

<< SELECT SOFTWARE KEY >>

# FIG. 4(b)

| AUTOMATIC | PROGRAM | PLAN | MACHINING MONITOR | DATA SET | | | |

S₁

| RETURN | CREATE | ALTER | PROCESS EDIT | CHECK DRAWING | MANAGE-MENT | | |

S₂    S₃

# FIG. 5

**PROGRAM EDITING**   00300 (   HAPPY )

| P NO | PROCESS | OUTER DIAMETER | INNER DIAMETER | LENGTH | END FACE | MATERIAL | FINISHING X | FINISHING Z | ROTATIONAL SPEED |
|---|---|---|---|---|---|---|---|---|---|
| 0 | COMMON | 200.000 | 0.000 | 300.000 | 5.000 | S45C | 2.000 | 2.000 | 1.990 |

| P NO | PROCESS | | | | RV | FV | F | CUT-IN | ROUGH-NESS | RT | | FT | |
|---|---|---|---|---|---|---|---|---|---|---|---|---|---|
| 1 | END FACE | | | | 14.50 | 29.50 | 6.5 | 5.000 | 1 | 1000 | 1 | 1012 | 2 |

| S NO | | STARTING POINT X | STARTING POINT Z | END POINT X | END POINT Z | | | | DWL | ROUGHNESS | S | M |
|---|---|---|---|---|---|---|---|---|---|---|---|---|
| 1 | | 200.000 | 5.000 | 0.000 | 0.000 | | | | **** | 1 | ** | 0 |

| P NO | PROCESS | CUT-IN POINT X | CUT-IN POINT Z | RV | FV | F | CUT-IN | ROUGHNESS | RT | | FT | |
|---|---|---|---|---|---|---|---|---|---|---|---|---|
| 2 | BAR MATERIAL· EXTERIOR | 200.000 | 0.000 | 14.50 | 29.50 | 6.5 | 5.000 | 1 | 1000 | 1 | 1012 | 2 |

| S NO | SHAPE | END POINT X | END POINT Z | CENTER | CENTER Z | RADIUS R | REAR C | DWL | ROUGHNESS | S | M |
|---|---|---|---|---|---|---|---|---|---|---|---|
| 1 | STARTING POINT | 100.000 | 0.000 | | | | | **** | 1 | ** | 0 |
| 2 | STRAIGHT LINE | 100.000 | 100.000 | ******* | ******* | | | | 1 | | |
| 3 | STRAIGHT LINE | 200.000 | 250.000 | ******* | ******* | | | | 1 | | |
| 4 | ESEQ | | | | | | | | | | |

| P NO | PROCESS |
|---|---|
| 3 | END |

| RETURN | CHECK DRAWING | DELETE | SHAPE ON/OFF | SELECT | STRAIGHT LINE | CONCAVE CIRCLE | CONVEX CIRCLE | | END |
|---|---|---|---|---|---|---|---|---|---|

S3'

EP 0 335 983 A1

# F.IG. 6

EP 0 335 983 A1

CHECK DRAWING            00300 (        HAPPY)

31          32          33

150.000

34

-150.300

-300.000                     125

                           200.000

| RETURN | | START AUTOMATIC | START | ENLARGE | PATH ON/OFF | DISPLAY SET | | | END |
|---|---|---|---|---|---|---|---|---|---|

S4

# FIG.7

CHECK DRAWING                    00300 (                    HAPPY)

22   23

| RETURN | | START AUTOMATIC | START | ENLARGE | PATH ON/OFF | DISPLAY SET | | | END |
|--------|--|-----------------|-------|---------|-------------|-------------|--|--|-----|

S5

EP 0 335 983 A1

# FIG.8

EP 0 335 983 A1

CHECK DRAWING          00300 (          HAPPY)

22   23

CKIM

| RETURN | | START AUTOMATIC | START | ENLARGE | PATH ON/OFF | DISPLAY SET | | | END |
|--------|--|-----------------|-------|---------|-------------|-------------|--|--|-----|

**I. CLASSIFICATION OF SUBJECT MATTER** (if several classification symbols apply, indicate all) [6]

According to International Patent Classification (IPC) or to both National Classification and IPC

Int.Cl$^4$    G05B19/405

**II. FIELDS SEARCHED**

| Minimum Documentation Searched [7] | |
|---|---|
| Classification System | Classification Symbols |
| IPC | G05B19/405, 23/02 |

| Documentation Searched other than Minimum Documentation to the Extent that such Documents are Included in the Fields Searched [8] | |
|---|---|
| Jitsuyo Shinan Koho | 1971 - 1988 |
| Kokai Jitsuyo Shinan Koho | 1971 - 1988 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 58-97706 (Yamazaki Tekkosho Kabushiki Kaisha) 10 June 1983 (10. 06. 83) Page 2, upper left column, line 5 to lower left column, line 14 (Family: none) | 1-3 |
| Y | JP, A, 61-100807 (Fanuc Ltd.) 19 May 1986 (19. 05. 86) Page 3, upper left column, line 13 to page 4, upper right column, line 12 (Family: none) | 1-3 |
| Y | JP, A, 61-33512 (Mitsubishi Electric Corporation) 17 February 1986 (17. 02. 86) Page 2, upper left column, line 17 to lower left column, line 12 (Family: none) | 1-3 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| December 2, 1988 (02. 12. 88) | December 19, 1988 (19. 12. 88) |
| International Searching Authority | Signature of Authorized Officer |
| Japanese Patent Office | |

Form PCT/ISA/210 (second sheet) (January 1985)